# EUROPÄISCHE PATENTSCHRIFT

(11) **EP 2 574 756 B1**
(45) Veröffentlichungstag und Bekanntmachung des Hinweises auf die Patenterteilung: **17.06.2020**
(21) Anmeldenummer: 11401604.1
(22) Anmeldetag: 30.09.2011
(51) Int. Cl.: F02C 3/36, F02C 6/06, F02C 6/08, F02C 6/16

(54) **Verfahren zum Betrieb eines adiabatischen Druckluftspeicherkraftwerks und adiabatisches Druckluftspeicherkraftwerk**
Method for operating an adiabatic compressed air storage power plant and adiabatic compressed air storage power plant
Procédé de fonctionnement d'une centrale d'accumulation d'air comprimé adiabatique et centrale d'accumulation d'air comprimé adiabatique

(43) Veröffentlichungstag der Anmeldung: 03.04.2013
(73) Patentinhaber: Deutsches Zentrum für Luft- und Raumfahrt e.V., 51147 Köln (DE)
(72) Erfinder: Mayer, Peter-Michael, 70192 Stuttgart (DE); Niklasch, Christoph, 71139 Ehningen (DE); Marquardt, Roland, 45894 Gelsenkirchen (DE); Moser, Peter, 50859 Köln (DE); Zunft, Stefan Martin, 70193 Stuttgart (DE)
(74) Vertreter: Hoeger, Stellrecht & Partner Patentanwälte mbB

(56) Entgegenhaltungen:
- FR-A1- 2 947 015
- GB-A- 2 472 128
- US-A- 4 158 145
- US-A1- 2009 282 822
- US-A1- 2010 257 862
- US-A1- 2011 127 004
- US-B2- 6 895 760
- Joseph Simmons: "Study of Compressed Air Energy Storage with Grid and Photovoltaic Energy Generation", , 1 August 2010 (2010-08-01), XP055323114, Retrieved from the Internet: URL:http://u.arizona.edu/~sreynold/caes.pd f [retrieved on 2016-11-25]
- Rwe Power: "ADELE - ADIABATIC COMPRESSED-AIR ENERGY STORAGE FOR ELECTRICITY SUPPLY", , 1 January 2010 (2010-01-01), XP055323121, Retrieved from the Internet: URL:https://www.rwe.com/web/cms/mediablob/ en/391748/data/364260/1/rwe-power-ag/innov ations/Brochure-ADELE.pdf [retrieved on 2016-11-25]

## Beschreibung

### Technisches Gebiet

Die Erfindung betrifft ein Verfahren zum Betrieb eines adiabatischen Druckluftspeicherkraftwerks gemäß dem Oberbegriff des Anspruchs 1 sowie ein adiabatisches Druckluftspeicherkraftwerk zur Durchführung eines solchen Verfahrens gemäß dem Oberbegriff des Anspruchs 10.

### Stand der Technik

Beispielsweise um wetterabhängige regenerative Energiequellen, wie etwa Windkraft und/oder Solarenenergie, zur Spitzenlast- und/oder Mittellast- und/oder Grundlast-Stromversorgung vorzusehen, werden Speicherkraftwerke benötigt, welche die Energie von während günstiger Wetterbedingungen gegenüber dem Stromverbrauch zuviel produzierten Stroms zum Ausgleich während ungünstiger Wetterbedingungen gegenüber dem Stromverbrauch zuwenig produzierten Stroms speichern können. Dabei kann auch längerfristig vorgesehen sein Energiemengen vorzuhalten, die beispielsweise Nachfrageunterschiede zwischen Sommer und Winter ausgleichen können.

Allgemein werden Speicherkraftwerke benötigt, um die Energie von während Zeiten geringen Stromverbrauchs zuviel produzierten Stroms zumindest so lange zwischenzuspeichern, bis der Stromverbrauch den momentan erzeugten Strom zu übersteigen droht.

Ein Druckluftspeicherkraftwerk ist ein Beispiel für ein solches Speicherkraftwerk.

Im Unterschied zu einem für den gleichen Einsatzzweck entwickelten Pumpspeicherkraftwerk, bei dem zu Schwachlastzeiten in einen hoch gelegenen Speichersee gepumptes Wasser über Fallrohre nach unten fließt und dabei mittels einer oder mehrerer Turbinen einen oder mehrere Generatoren antreibt, nutzt ein Druckluftspeicherkraftwerk die Energie, die in verdichteter bzw. komprimierter Luft steckt. In Schwachlastzeiten wird hierbei mit einem elektrisch angetriebenen Verdichter Luft verdichtet und in einem Druckluftspeicher gespeichert, beispielsweise in einer unterirdischen Kaverne oder Mine. In Zeiten z.B. hoher Stromnachfrage, wie etwa bei Spitzenlast, wird die Druckluft aus dem Druckluftspeicher entnommen und in einer Turbine entspannt, die ihre Leistung an einen gekoppelten Generator abgibt.

Dabei stellt ein Druckluftspeicherkraftwerk kein Kraftwerk im herkömmlichen Sinne dar, da bei der Verdichtung der Luft mehr Energie aufgewandt werden muss, als bei deren Entspannung wieder entnommen werden kann. Ein Druckluftspeicherkraftwerk ist demnach vielmehr ein Energiespeicher mit einem oder mehreren Druckluftspeichern und angeschlossener Turbine und Generator zur Bereitstellung elektrischen Stroms zu Zeiten der Spitzenlast.

Bekannte Probleme von Druckluftspeicherkraftwerken sind deren eingeschränkter Gesamtwirkungsgrad bedingt einerseits durch hohe Verluste aufgrund beabsichtigter und unbeabsichtigter Wärmeabgabe bei der Erzeugung und Speicherung der Druckluft sowie andererseits durch gegebenenfalls vorgesehene, der Gefahr einer Vereisung der Turbine bei der Entspannung der Druckluft entgegnwirkender konventioneller Maßnahmen. Die Gründe hierfür sind folgende:
- Die Verdichtung bzw. Kompression der Luft führt zu einer Erhöhung von deren Temperatur. Näherungsweise kann hierbei von einer adiabatischen Zustandsänderung ausgegangen werden, bei der die vom Verdichter an der Luft verrichtete Arbeit direkt die innere Energie der Luft und damit deren Temperatur erhöht. Hierbei können je nach thermodynamischem Ausgangszustand der Luft, Verdichterleistung und Gesamtdruckverhältnis aller Stufen des Verdichters Temperaturen von weit über 1000°C erreicht werden. Um die Komponenten der Anlage vor diesen Temperaturen zu schützen ist bekannt, die Temperatur der verdichteten Luft über beispielsweise kühlmitteldurchströmte Wärmetauscher an die Umgebung abzugeben.
- Abhängig von der Dauer des Verbleibs der verdichteten Luft bis zu deren Wiederentnahme im Druckluftspeicher findet eine Abgabe eines Teils der Wärme über die Wandungen des Druckluftspeichers an die Umgebung statt. Ist der Druckluftspeicher beispielsweise eine Kaverne oder eine Mine wird die Wärme an das umgebende Mineral bzw. Gestein abgegeben.
- Die Luft kühlt bei der Expansion in der Turbine stark ab. Hierdurch kann in der Luft enthaltene Restfeuchtigkeit gefrieren und die Turbine vereisen. Um dies zu verhindern muss die Luft vor oder während der Entspannung erwärmt werden, beispielsweise durch konventionelles Zuheizen mittels eines Brennstoffs, wie etwa Erdgas. Hierbei wird der Brennstoff der Luft bei deren Entnahme aus dem Druckluftspeicher beigemengt. Das Brennstoff-Luft-Gemisch wird anschließend vor dem Eintritt in eine Gasturbine entzündet, welche den Generator antreibt.

Zur Verbesserung des Gesamtwirkungsgrads von Druckluftspeicherkraftwerken ist bekannt, die Restwärme der der Gasturbine entweichenden Abgase mittels eines Rekuperators der aus dem Druckluftspeicher entnommenen Luft noch vor deren Eintritt in die Gasturbine zuzuführen. Hierdurch wird zumindest der Brennwert des Brennstoff-Luft-Gemischs besser ausgeschöpft.

Darüber hinaus sind so genannte adiabatische Druckluftspeicherkraftwerke bekannt, bei denen zumindest zum Teil die bei der Verdichtung der Luft erzeugte Wärme unter Abkühlung der verdichteten Luft bei deren Zufuhr zum Druckluftspeicher einem Wärmespeicher zugeführt wird und der Wärmespeicher bei der Entnahme der Druckluft aus dem Druckluftspeicher wieder entladen wird, indem die in dem Wärmespeicher gespeicherte Wärme der unter Entspannung durch die Turbine strömenden Luft wieder zugeführt wird. Bei der Entnahme aus dem Druckluftspeicher durchströmt die komprimierte Luft hierbei den Wärmespeicher, erhitzt sich und gelangt erst dann in die Turbine. Dadurch wird weniger oder idealerweise gar kein Brennstoff zur Erwärmung der Luft benötigt. Während der Expansion in der Turbine kühlt die Luft auf Umgebungstemperatur ab. Ein adiabatisches Druckluftspeicherkraftwerks umfasst somit wenigstens zwei Energiespeicher, mindestens einen ersten bestehend aus einem oder mehreren Druckluftspeichern zur Zwischenspeicherung potentieller Energie, sowie mindestens einen zweiten bestehend aus mindestens einem Wärmespeicher zur Zwischenspeicherung von Wärme. Ein adiabatisches Druckluftspeicherkraftwerk erreicht so im Vergleich zu einem zuvor beschriebenen Druckluftspeicherkraftwerk mit Gasturbine einen höheren Wirkungsgrad. Entgegen ihrer Bezeichnung führen adiabatische Druckluftspeicherkraftwerke jedoch keine adiabatischen Zustandsänderungen aus, sie kommen durch die Rückführung der bei der Verdichtung erzeugten Wärme an die aus dem Druckluftspeicher entnommene Luft dem Wirkungsgrad adiabatischer Zustandsänderungen lediglich näher.

Damit ein Wärmespeicher seine Wärmespeicherfunktion erfüllen kann, weist dieser vorzugsweise in einem beispielsweise durch einen Behälterinnenraum gebildeten Wärmespeicherraum beherbergte Wärmespeichermittel auf. Die Wärmespeichermittel sind in der Lage, einem Arbeitsfluid Wärme zu entnehmen, die Wärme über einen bestimmten Zeitraum hinweg zu speichern und anschließend beispielsweise dem selben Arbeitsfluid wieder zuzuführen. Dabei wird den Wärmespeichermitteln zunächst vermittels des Arbeitsfluids Wärme zugeführt, welche anschließend von den Wärmespeichermitteln möglichst verlustarm gespeichert wird, um zumindest einen Teil der gespeicherte Wärme den Wärmespeichermitteln bei Bedarf vermittels des Arbeitsfluids wieder zu entziehen.

Bei dem Arbeitsfluid kann es sich direkt um die dem Druckluftspeicher zuzuführende und diesem wieder zu entnehmende Druckluft handeln. Anstelle von Luft kommt hierbei grundsätzlich jedes unter Betriebsbedingungen eines Druckluftspeicherkraftwerks gasförmige, kompressible Medium in Frage. Bei dem Arbeitsfluid kann es sich auch um ein Wärmeübertragungsmittel handeln, dass in einem eigenen Kreislauf zirkuliert, der zumindest einen zwischen Verdichter und Druckluftspeicher bzw. Druckluftspeicher und Turbine angeordneten Wärmetauscher umfasst, welcher primärseitig von der Druckluft durchströmt ist.

Handelt es sich bei dem Arbeitsfluid um die dem Druckluftspeicher zuzuführende und diesem wieder zu entnehmende Druckluft, kann der Wärmespeicher einen auch als Containment bezeichneten Druckbehälter umfassen, beispielsweise indem er Teil eines als Wärmespeicher ausgeführten Druckbehälters ist, welcher den Wärmespeicherraum mit den darin beherbergten Wärmespeichermitteln umgibt, so dass die Wärmespeichermittel zumindest während des Auf- und Entladens des Druckspeichers von der Druckluft durchströmt werden können und dabei zum Wärmeaustausch unmittelbar mit der Druckluft in Kontakt kommen.

Ein Nachteil der bekannten adiabatischen Druckluftspeicherkraftwerke ist, dass insbesondere bei einem lange anhaltenden Speicherbetrieb, bei dem der Druckluftspeicher zumindest teilweise gefüllt ist und im Gegensatz zum Aufladebetrieb weder eine Verdichtung, noch im Gegensatz zum Entladebetrieb eine Entspannung vorgenommen wird, das Temperaturniveau im Wärmespeicher sinkt, beispielsweise aufgrund von Verlusten und/oder einer notwendigen Kühlung zum Schutz beispielsweise eines Betonmantels eines Druckbehälters des Wärmespeichers. Hält der Speicherbetrieb über einen langen Zeitraum hinweg an, kann das Temperaturniveau im Wärmespeicher so weit abfallen, dass eine wirtschaftlich sinnvolle Entladung des Druckluftspeichers nicht mehr möglich ist, ohne eine Vereisung der Turbine in Kauf nehmen zu müssen. Dadurch ist die Verfügbarkeit von adiabatischen Druckluftspeicherkraftwerken nur eingeschränkt sichergestellt, wodurch diese ihrer eigentlichen Aufgabe einer Behebung kurzfristiger Versorgungsengpässe im Stromnetz durch eine kurzfristige Zurverfügungstellung gegenüber dem Stromverbrauch zuwenig produzierten Stroms nicht mehr vollumfänglich nach kommen können.

Darüber hinaus sind die bekannten adiabatischen Druckluftspeicherkraftwerke nicht in der Lage, gegenüber dem Stromverbrauch zuviel produzierten Strom dem Stromnetz zu entziehen, wenn deren Druckluftspeicher voll sind.

Zusammengefasst ergibt sich dadurch eine nicht zufrieden stellende Verfügbarkeit der bekannten adiabatischen Druckluftspeicherkraftwerke.

Durch GB 2472128 A ist ein Druckluftspeicherkraftwerk bekannt, bei dem während des Entladebetriebs aus einem Druckluftspeicher entnommene Druckluft vor deren Expansion in einer Turbine vermittels eines Wärmespeichers erhitzt wird. Der Wärmespeicher ist unabhängig von einem während des Aufladebetriebs benutzten Verdichterzugs. Der Wärmespeicher wird direkt mit elektrischer Energie beheizt.

Durch US 4,158,145 ist ein Druckluftspeicherkraftwerk mit einer mit Kohlegas befeuerten Brennkammer bekannt. Das Kohlegas wird vermittels eines kontinuierlich betriebenen Kohlevergasers hergestellt. Überschüssiges und momentan nicht benötigtes Kohlegas wird bis zu dessen Bedarf durch Verbrennung in einer Brennkammer und nachfolgende Expansion der Abgase in einer Turbine zwischengespeichert. Während des Aufladebetriebs wird zur Zurverfügungstellung der für den Kohlevergaser benötigte Energie ein Teil der verdichteten Druckluft abgezweigt und dem Kohlevergaser zugeführt. Während des Speicherbetriebs und des Entladebetriebs wird die für den Kohlevergaser benötigte Energie vermittels einer elektrischen Zuheizung zugeführt.

Durch US 2011/0127004 A1 ist ein adiabatisches Druckluftspeicherkraftwerk bekannt.

Durch US 2010/0257862 A1 ist eine Energiespeichervorrichtung mit einem Hochdruck-Hochtemperaturspeicher und einem Niederdruck-Niedertemperaturspeicher sowie gekoppelten Heiß- und Kalt- bzw. Hoch- und Niederdruck-Kompressoren und Expandern bekannt. Hochdruck kann hierbei Umgebungsdruck bezeichnen. Ein druckfreier Speicher kann elektrisch beheizt werden. Verschiedene Energiespeicherarten umfassen heiße Speicherung, kalte Speicherung, sowie kombinierte heiße und kalte Speicherung. Die während des Aufladebetriebs und des Entladebetriebs dabei stattfindenden thermodynamische Prozesse: isotherme Verdichtung, isobare Kühlung, isentrope Entspannung und isentrope Verdichtung, gelten als theoretisch reversibel.

Durch FR 2 947 015 A1 ist ein adiabatisches Druckluftspeicherkraftwerk bekannt. Um einer Überhitzung des Wärmespeichers vorzubeugen ist vorgesehen, vor jedem Aufladebetrieb den Wärmespeicher zu kühlen.

Durch US 2004/0148922 A2 ist ein adiabatisches Druckluftspeicherkraftwerk bekannt, bei dem eine elektrische Zuheizung in einen von einem zur Entnahme und Speicherung von während des Verdichtens der Druckluft entstehender Wärme und deren Wiederabgabe während des Entspannens der Druckluft vorgesehenen ersten Wärmespeicher getrennt angeordneten zweiten Wärmespeicher erfolgt.

### Aufgabe der Erfindung

Der Erfindung liegt die Aufgabe zugrunde, ein Verfahren zum Betrieb eines adiabatischen Druckluftspeicherkraftwerks mit verbesserter Verfügbarkeit zu entwickeln, welches darüber hinaus mit einfachen Mitteln kostengünstig verwirklicht werden kann, sowie ein zur Durchführung eines solchen Verfahrens geeignetes adiabatisches Druckluftspeicherkraftwerk zur Verfügung zu stellen.

### Darstellung der Erfindung

Die Aufgabe wird jeweils gelöst mit den Merkmalen der unabhängigen Ansprüche.

Ein erster Gegenstand der Erfindung betrifft demnach ein Verfahren zum Betrieb eines
- mindestens eine Turbomaschine zum Verdichten und/oder Entspannen von Druckluft unter Verbrauch bzw. Erzeugung mechanischer Energie,
- zumindest einen zeitweilig mit mindestens einer Turbomaschine während des Verdichtens von Druckluft mechanisch gekoppelten Antriebsmotor zur Erzeugung von während des Verdichtens von Druckluft verbrauchter bzw. benötigter mechanischer Energie,
- mindestens einen zeitweilig mit mindestens einer Turbomaschine während des Entspannens von Druckluft mechanisch gekoppelten Generator zur Umwandlung von während des Entspannens von Druckluft erzeugter mechanischer Energie in Elektrizität,
- mindestens einen zumindest zeitweilig mit mindestens einer Turbomaschine kommunizierenden Druckspeicher zur Zwischenspeicherung verdichteter Druckluft, sowie
- mindestens einen beispielsweise zumindest zeitweilig mit mindestens einer Turbomaschine und dem Druckspeicher kommunizierenden Wärmespeicher zur Entnahme und Speicherung von während des Verdichtens der Druckluft entstehender Wärme und deren Wiederabgabe während des Entspannens der Druckluft, mit einem beispielsweise von einem einen bevorzugt vorgespannten Betonmantel aufweisenden Druckbehälter umgebenen, Wärmespeichermittel beherbergenden Wärmespeicherraum,
umfassenden adiabatischen Druckluftspeicherkraftwerks.

Das Verfahren sieht eine elektrische Zuheizung in den zur Entnahme und Speicherung von während des Verdichtens der Druckluft entstehender Wärme und deren Wiederabgabe während des Entspannens der Druckluft vor, wenn der Druckluftspeicher voll ist. Die elektrische Zuheizung findet vorzugsweise nur dann zumindest zeitweilig statt, wenn dem Druckluftspeicher beispielsweise während des Speicher- und/oder Entladebetriebs keine neu verdichtete Druckluft zugeführt wird oder zugeführt werden kann, beispielsweise weil der Druckluftspeicher voll ist oder gerade entleert wird. Kann dem Druckluftspeicher noch Druckluft zugeführt werden und wird der Druckluftspeicher gerade nicht entleert, findet vorzugsweise keine elektrische Zuheizung statt, sondern wird Druckluft verdichtet und dem Druckluftspeicher unter Einbringung der beim Verdichten entstehenden Wärme in den Wärmespeicher zugeführt. Wird dem Druckluftspeicher keine Druckluft zugeführt oder kann diesem keine Druckluft mehr zugeführt werden, so steht die Druckluft nicht zum Einbringen von Wärme in den Wärmespeicher zur Verfügung, beispielsweise um einer vollständigen Entleerung des Druckluftspeichers entgegenstehende Wärmeverluste des Wärmespeichers auszugleichen. Durch eine elektrische Zuheizung, sei es beispielsweise eine elektrische Zuheizung des Wärmespeichers oder der dem Druckluftspeicher entnommenen Druckluft während des Entspannens, können die genannten Wärmeverluste dennoch zumindest ausgeglichen werden, wodurch die Verfügbarkeit des adiabatischen Druckluftspeicherkraftwerks verbessert wird.

Darüber hinaus kann durch elektrische Zuheizung, beispielsweise einer elektrischen Zuheizung in die dem Druckluftspeicher entnommene bzw. der dem Druckluftspeicher entnommenen Druckluft während des Entspannens, zumindest zeitweilig eine gleichmäßige Turbomaschineneintrittstemperatur verwirklicht werden, wodurch der Wirkungsgrad der Turbomaschine zum Entspannen während des Entladebetriebs vergleichmäßigt und dadurch verbessert wird. Hierdurch kann ein Nachteil der bekannten adiabatischen Druckluftspeicherkraftwerke zumindest teilweise behoben werden, wonach deren Turbomaschinen für ein bestimmtes Druck- und Temperaturniveau ausgelegt sind, bei dem sie ihren optimalen Wirkungsgrad erreichen. Im tatsächlichen Betrieb eines adiabatischen Druckluftspeicherkraftwerks verändern sich jedoch die beiden Größen Druck und Temperatur während der Entnahme der Druckluft aus dem Druckluftspeicher, wodurch der tatsächlich erreichbare Wirkungsgrad in nahezu allen Betriebszuständen niedriger ist, als im Auslegungszustand. Durch elektrische Zuheizung der dem Druckluftspeicher entnommenen Druckluft während des Entspannens kann zumindest eine im Vergleich zum Stand der Technik gleichmäßigere Turbomaschineneintrittstemperatur einhergehend mit einer Wirkungsgradverbesserung erreicht werden.

Die elektrische Zuheizung findet bevorzugt in den Wärmespeicher und/oder während des Entspannens in die dem Druckluftspeicher entnommene Druckluft statt.

Das Verfahren kann eine Zwischenspeicherung von zu Beginn des Entladebetriebs im Vergleich zum Ende des Entladebetriebs mehr produzierter Elektrizität und Weiterverwendung dieser Elektrizität zur zumindest teilweisen Erhitzung der Druckluft durch elektrische Zuheizung gegen Ende des Entladebetriebs vorsehen. Die während des Entspannens von Druckluft erzeugte mechanische Leistung der Turbomaschine zum Entspannen nimmt mit abnehmender Turbomaschineneintrittstemperatur ab. Mit zunehmender Dauer des Entladebetriebs sinkt das Temperaturniveau im Wärmespeicher einhergehend mit abnehmender Turbomaschineneintrittstemperatur. Durch die Zwischenspeicherung von während des Entspannens während Zeiten hoher erzeugter mechanischer Leistung gegenüber Zeiten geringerer erzeugter mechanischer Leistung mehr gewonnener Elektrizität und deren Verwendung zur zumindest teilweisen Erhitzung der Druckluft während Zeiten geringerer erzeugter mechanischer Leistung kann ein länger anhaltender Entladebetrieb bei gleichmäßiger Elektrizitätsproduktion verwirklicht werden. Zur Zwischenspeicherung der Elektrizität eignet sich beispielsweise eine Batterie oder ein Akkumulator oder dergleichen. Auch eine Zwischenspeicherung vermittels eines kapazitiven Speichermittels ist denkbar, ebenso wie eine mechanische Speicherung beispielsweise in Form kinetischer Energie z.B. mittels einer Schwungmasse oder in Form potentieller Energie z.B. mittels eines Pumpspeichers.

Beispielsweise kann zumindest gegen Ende des Entladebetriebs ein erster Teil von dem Druckluftspeicher entnommener Druckluft durch elektrische Zuheizung und ein zweiter Teil vermittels aus dem Wärmespeicher entnommener Wärme erhitzt werden. Anschließend können der erste Teil und der zweite Teil unter Einhaltung einer vorzugsweise gleich bleibenden Turbomaschineneintrittstemperatur gemischt und der Turbomaschine zum Entspannen zugeführt werden. Eine durch eine vorzugsweise gleich bleibende Turbomaschineneintrittstemperatur erzielte Wirkungsgradverbesserung der Turbomaschine zum Entspannen kann den Elektrizitätsbedarf für die elektrische Zuheizung zumindest teilweise ausgleichen.

Hierzu kann der erste Teil durch einen Bypass mit elektrischer Heizung am Wärmespeicher vorbei und der zweite Teil beispielsweise durch den Wärmespeicher hindurch geleitet werden.

Um die Turbomaschine zum Entspannen zumindest für einen begrenzten Zeitraum während des Entladebetriebs sowohl unter konstanter Turbomaschineneintrittstemperatur, als auch unter konstantem Turbomaschineneintrittsdruck zu betreiben, kann vorgesehen sein, die Druckluft vor dem Entspannen in einer Turbomaschine auf ein gleich bleibendes Druckniveau zu verdichten.

Dies kann beispielsweise durch Verwendung eines isobaren Druckluftspeichers verwirklicht sein. Hierbei handelt es sich um einen unterhalb einer Wassersäule positionierten Druckluftspeicher. Indem der Druckluftspeicher, wie etwa eine unterirdische Kaverne, mit einem höher gelegenen Wasserspeicher, beispielsweise einem See, verbunden wird, kann der Druck im Druckluftspeicher während des Auflade-, Speicher- und Entladebetriebs konstant gehalten werden. Während des Einblasens der Luft in den Druckluftspeicher verdrängt sie das Wasser von dort in den Wasserspeicher, wohingegen während der Entnahme der Druckluft das Wasser wieder in den Druckluftspeicher strömt. Die Druckänderung im Druckluftspeicher verringert sich dadurch auf die Schwankung der Oberfläche des Sees. Praktisch keinen Druckänderungen ausgesetzt ist ein am Meeresgrund positionierter und mit dem umgebenden Seewasser kommunizierender Druckluftspeicher. Ein sich durch einen isobaren Druckluftspeicher zusätzlich ergebender Vorteil ist, dass auch die Turbomaschine zum Verdichten unter gleich bleibenden Druck- und Temperaturverhältnissen betrieben werden können.

Ist beispielsweise kein isobarer Druckluftspeicher verfügbar, kann vorgesehen sein, mit sinkendem Druck im Druckluftspeicher einen elektrisch angetriebenen Verdichter mit zunehmendem Verdichtungsverhältnis zu betreiben. Dabei kann vorgesehen sein, das Verdichtungsverhältnis zumindest für einen begrenzten Zeitraum während des Entladebetriebs zeitlich ständig anzuheben, so dass mit dem momentanen Verdichtungsverhältnis ausgehend vom momentanen Druck im Druckluftspeicher ein gleich bleibendes Druckniveau eines konstanten Turbomaschineneintrittsdrucks zumindest für einen begrenzten Zeitraum während des Entladebetriebs erreicht wird. Da mit zunehmendem Verdichtungsverhältnis auch die so in die Druckluft eingebrachte Verdichtungsleistung zunimmt, nimmt auch mit zunehmendem Verdichtungsverhältnis die Temperaturzunahme durch die Verdichtung zu. Indem der Verdichter elektrisch angetrieben wird, stellt die Temperaturzunahme durch Verdichtung auch eine elektrische Zuheizung dar, einhergehend mit dem Vorteil zumindest einer Vergleichmäßigung sowohl des Turbomaschineneintrittsdrucks, als auch der Turbomaschineneintrittstemperatur. Die benötigte elektrische Energie zum Betrieb des Verdichters kann beispielsweise wie zuvor beschrieben durch Zwischenspeicherung von gegenüber zum Ende des Entladebetriebs hin zu Beginn des Entladebetriebs mehr produzierter Elektrizität bereit gestellt werden, oder von der während des Entspannens erzeugten Elektrizität abgezweigt werden. Eine durch eine zumindest zeitweilig gleich bleibende Turbomaschineneintrittstemperatur und einen zumindest zeitweilig gleich bleibenden Turbomaschineneintrittsdruck erzielte Wirkungsgradverbesserung der Turbomaschine zum Entspannen kann den Elektrizitätsbedarf für die elektrische Zuheizung durch elektrischen Betrieb des Verdichters zumindest teilweise ausgleichen.

Beispielsweise kann ein ein mit abnehmenden Druck im Druckluftspeicher zunehmendes Verdichtungsverhältnis besorgender Verdichter als Radialverdichter ausgeführt sein. Ein Radialverdichter nutzt die Massenträgheit der Luft und weist in einem weiten Drehzahlbereich einen im Vergleich zu einem Axialverdichter weitgehend konstanten Wirkungsgrad auf, der unabhängig vom Verdichtungsverhältnis ist. Darüber hinaus kann ein Radialverdichter in einem weiten Drehzahlbereich eingesetzt werden, wobei dessen Verdichtungsverhältnis proportional der Drehzahl ist.

Darüber hinaus kann beispielsweise mittels eines Wärmetauschers und/oder eines zumindest einen Wärmetauscher umfassenden Rekuperators Umgebungswärme und/oder nach dem Entspannen noch in der Luft enthaltene Restwärme der aus dem Druckluftspeicher entnommenen und noch kalten Druckluft zugeführt werden.

Ein zweiter Gegenstand der Erfindung betrifft ein adiabatisches Druckluftspeicherkraftwerk umfassend:
- mindestens eine Turbomaschine zum Verdichten und/oder Entspannen von Druckluft unter Verbrauch bzw. Erzeugung mechanischer Energie,
- zumindest einen zeitweilig mit mindestens einer Turbomaschine während des Verdichtens von Druckluft mechanisch gekoppelten Antriebsmotor zur Erzeugung von während des Verdichtens von Druckluft verbrauchter bzw. benötigter mechanischer Energie,
- mindestens einen zeitweilig mit mindestens einer Turbomaschine während des Entspannens von Druckluft mechanisch gekoppelten Generator zur Umwandlung von während des Entspannens von Druckluft erzeugter mechanischer Energie in Elektrizität,
- mindestens einen zumindest zeitweilig mit mindestens einer Turbomaschine kommunizierenden Druckspeicher zur Zwischenspeicherung verdichteter Druckluft, sowie
- mindestens einen beispielsweise zumindest zeitweilig mit mindestens einer Turbomaschine und dem Druckspeicher kommunizierenden Wärmespeicher zur Entnahme und Speicherung von während des Verdichtens der Druckluft entstehender Wärme und deren Wiederabgabe während des Entspannens der Druckluft, mit einem beispielsweise von einem einen bevorzugt vorgespannten Betonmantel aufweisenden Druckbehälter umgebenen, Wärmespeichermittel beherbergenden Wärmespeicherraum.

Das adiabatische Druckluftspeicherkraftwerk verfügt außerdem über Mittel zur elektrischen Zuheizung, wobei mittels der Mittel zur elektrischen Zuheizung eine elektrische Zuheizung zumindest während des Speicherbetriebs des adiabatischen Druckluftspeicherkraftwerks in den Wärmespeicher erfolgt, wenn der Druckluftspeicher voll ist.

Die Mittel zur elektrischen Zuheizung sind im Wärmespeicher angeordnet. Zusätzlich können sie in einer den Druckluftspeicher zumindest zeitweilig mit der Turbomaschine zum Entspannen von dem Druckluftspeicher entnommener Druckluft verbindenden Druckluftleitung, beispielsweise vor und/oder nach und/oder parallel zum Wärmespeicher angeordnet sein.

Die Mittel zur elektrischen Zuheizung umfassen eine elektrische Heizung. Zusätzlich können sie einen von einem elektrischen Antriebsmotor elektrisch angetriebenen Verdichter umfassen. Der Verdichter hat bevorzugt ein variables Verdichtungsverhältnis. Das Verdichtungsverhältnis ist bevorzugt proportional der Drehzahl des Verdichters und damit des elektrischen Antriebsmotors. Besonders bevorzugt handelt es sich bei dem Verdichter um einen Radialverdichter.

Darüber hinaus kann das adiabatische Druckluftspeicherkraftwerk Mittel zur Zwischenspeicherung von zu Beginn des Entladebetriebs im Vergleich zum Ende des Entladebetriebs mehr produzierter Elektrizität beispielsweise bis zu einer Zurverfügungstellung dieser Elektrizität an die Mittel zur elektrischen Zuheizung zur zumindest teilweisen Erhitzung der Druckluft zumindest gegen Ende des Entladebetriebs umfassen.

Außerdem kann das adiabatische Druckluftspeicherkraftwerk einen zwischen Druckluftspeicher und Turbomaschine zum Entspannen von Druckluft angeordneten, regelbaren Bypass umfassen, in dem ein Mittel zur elektrischen Zuheizung, beispielsweise eine elektrische Heizung angeordnet sein kann, so dass beispielsweise gegen Ende des Entladebetriebs ein veränderlicher, vorzugsweise ein zeitlich zunehmender erster Teil der dem Druckluftspeicher entnommenen Druckluft durch den regelbaren Bypass strömt und dort durch ein beispielsweise eine elektrische Heizung umfassendes Mittel zur elektrischen Zuheizung erhitzt wird, und ein veränderlicher, vorzugsweise ein zeitlich abnehmender zweiter Teil der dem Druckluftspeicher entnommenen Druckluft vermittels Wärme aus dem Wärmespeicher erhitzt wird, und anschließend der erste Teil und der zweite Teil zu Mischdruckluft vorzugsweise konstanter Turbomaschineneintrittstemperatur gemischt werden und die Mischdruckluft der Turbomaschine zum Entspannen zugeführt wird.

Der eine Turbomaschine zum Verdichten von Druckluft antreibende Antriebsmotor und der von einer Turbomaschine zum Entspannen von Druckluft angetriebene Generator können durch ein und die selbe elektrische Maschine verwirklicht sein.

Das adiabatische Druckluftspeicherkraftwerk kann darüber hinaus ein oder mehrere Mittel zur Umsetzung von bereits zum vorher beschriebenen Verfahren näher erläuterten Ausgestaltungsvarianten aufweisen. Beispielsweise kann das adiabatische Druckluftspeicherkraftwerk alternativ oder zusätzlich einen einleitend beschriebenen isobaren Druckluftspeicher umfassen, wodurch eine Wirkungsgradsteigerung erreicht wird.

Vorteile gegenüber dem Stand der Technik ergeben sich durch eine verbesserte Verfügbarkeit eines adiabatischen Druckluftspeicherkraftwerks durch die Möglichkeit, auch nach beispielsweise lange anhaltendem Speicherbetrieb Wärmeverluste des Wärmespeichers durch die elektrische Zuheizung ausgleichen zu können und den Druckluftspeicher auch dann noch vollständig entleeren zu können.

Darüber hinaus kann das adiabatische Druckluftspeicherkraftwerk mit elektrischer Zuheizung in den Wärmespeicher auch im Speicherbetrieb, wenn der Druckluftspeicher beispielsweise vollständig gefüllt ist, weiterhin dem Stromnetz gegenüber dem momentanen Verbrauch zuviel produzierten Strom entziehen und dadurch einer wesentlichen Aufgabe von Speicherkraftwerken nachkommen.

Weitere Vorteile sind, dass zumindest im Speicherbetrieb ein beispielsweise gleich bleibend hohes Temperaturniveau im Wärmespeicher auch über einen längeren Zeitraum hinweg sicherstellt werden kann und dass die Erfindung und mit einfachen Mitteln kostengünstig verwirklicht werden kann.

Wichtig ist hervorzuheben, dass ein derartiges mit einer unterstützenden elektrischen Zuheizung betriebenes Druckluftspeicherkraftwerk nach wie vor als adiabatisches Druckluftspeicherkraftwerk im Sinne der Eingangs bereitgestellten Definition bezeichnet werden kann, da es im Gegensatz zu einem konventionellen Druckluftspeicherkraftwerk einen Gesamtwirkungsgrad aufweist, der näher an der adiabaitschen Zustandsänderung liegt, als derjenige eines konventionellen Druckluftspeicherkraftwerks. Die Verwendung der Bezeichnung adiabatisches Druckluftspeicherkraftwerk ist insbesondere aufgrund des Wärmespeichers berechtigt, welcher zumindest einen Teil der bei der Verdichtung entstehenden Wärme zwischenspeichert und bei der Entspannung wieder an die Druckluft abgibt.

Ebenso wichtig ist hervorzuheben, dass der Begriff Druckluft keine Einschränkung auf komprimierte Luft darstellt, sondern stellvertretend für unter Druck stehende, zumindest innerhalb des im Betrieb eines adiabatischen Druckluftspeicherkraftwerks auftretenden Temperaturbereichs gasförmige Fluide ist.

### Kurzbeschreibung der Zeichnungen

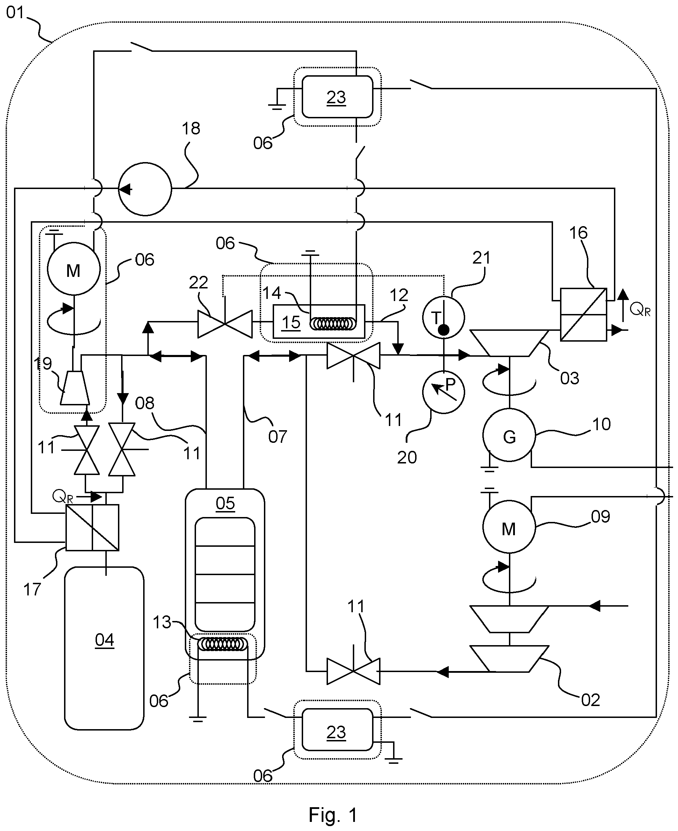

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber können nur Bezugszeichen in den einzelnen Zeichnungen dargestellt sein, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Die einzige Zeichnung Fig. 1 zeigt in schematischer Darstellung ein erfindungsgemäßes adiabatisches Druckluftspeicherkraftwerk.

### Ausführliche Beschreibung der bevorzugten Ausführungsbeispiele

Ein in Fig. 1 dargestelltes adiabatisches Druckluftspeicherkraftwerk 01 weist im Wesentlichen
- mindestens eine Turbomaschine 02 zum Verdichten von Druckluft unter Verbrauch mechanischer Energie,
- mindestens eine Turbomaschine 03 zum Entspannen von Druckluft unter Erzeugung mechanischer Energie,
- mindestens einen zumindest zeitweilig beispielsweise abwechselnd, jedoch nicht gleichzeitig, mit mindestens einer Turbomaschine 02 zum Verdichten von Druckluft und mit mindestens einer Turbomaschine 03 zum Entspannen von Druckluft kommunizierenden Druckspeicher 04 zur Zwischenspeicherung verdichteter Druckluft,
- mindestens einen Wärmespeicher 05 zur Entnahme und Speicherung von während des Verdichtens der Druckluft entstehender Wärme und deren Wiederabgabe an die Druckluft während des Entspannens der Druckluft, sowie
- Mittel (06) zur elektrischen Zuheizung.

Der Wärmespeicher 05 steht mit einer ersten Zu- und/oder Abführungsleitung 07 während des Aufladens mit der Turbomaschine 02 zum Verdichten von Druckluft und während des Entladens mit der Turbomaschine 03 zum Entspannen von Druckluft in Verbindung bzw. ist über die erste Zu- und/oder Abführungsleitung 07 wahlweise mit einer der genannten Turbomaschinen 02, 03 in Verbindung bringbar.

Eine zweite Zu- und/oder Abführungsleitung 08 verbindet zumindest zeitweilig, zumindest jedoch während des durch das Verdichten von Druckluft unter Zwischenspeicherung der dabei entstehenden Wärme im Wärmespeicher 05 und unter Speicherung der verdichteten Druckluft im Druckluftspeicher 04 gekennzeichneten Aufladebetriebs, sowie während des durch das Entspannen von Druckluft unter Verbrauch von im Wärmespeicher 05 gespeicherter Wärme und unter Entnehme der verdichteten Druckluft aus dem Druckluftspeicher 04 gekennzeichneten Entladebetriebs des adiabatischen Druckluftspeicherkraftwerks 01 den Wärmespeicher 05 mit dem beispielsweise zumindest teilweise unterhalb des Erdbodens angeordneten Druckluftspeicher 04.

Die genannten Turbomaschinen 02, 03 können ein oder mehrstufig ausgeführt sein, wie für die Turbomaschine 02 angedeutet. Grundsätzlich ist denkbar, eine einzige Turbomaschine 02, 03 für beide genannten Zwecke vorzusehen, welche in entgegengesetzten Richtungen durchströmt werden kann, in einer ersten Richtung um Druckluft zu verdichten und in einer zweiten, entgegengesetzten Richtung, um Druckluft zu entspannen.

Das adiabatische Druckluftspeicherkraftwerk 01 umfasst zusätzlich zumindest einen zeitweilig mit der Turbomaschine 02 während des Verdichtens von Druckluft mechanisch gekoppelten Antriebsmotor 09 zur Bereitstellung der zum Verdichten von der Turbomaschine 02 benötigten mechanischer Energie.

Das adiabatische Druckluftspeicherkraftwerk 01 umfasst außerdem mindestens einen zeitweilig mit der Turbomaschine 03 während des Entspannens von Druckluft mechanisch gekoppelten Generator 10 zur Umwandlung bei der Entspannung der Druckluft von der Turbomaschine 03 erzeugter mechanischer Energie in Elektrizität.

Der Antriebsmotor 09 und der Generator 10 können durch ein und die selbe elektrische Maschine verwirklicht sein.

Diverse, nicht näher bezeichnete Absperrmittel 11 stellen die zeitweilig benötigten strömungs- und/oder wärmetechnischen Verbindungen zwischen den einzelnen Komponenten des adiabatischen Druckluftspeicherkraftwerks 01 her.

Die Mittel 06 zur elektrischen Zuheizung sind im Wärmespeicher 05 angeordnet. Sie können zusätzlich in einer den Druckluftspeicher 04 zumindest zeitweilig mit der Turbomaschine 03 zum Entspannen von dem Druckluftspeicher entnommener Druckluft verbindenden Druckluftleitung beispielsweise vor und/oder nach und/oder parallel zum Wärmespeicher 05 angeordnet sein. Die Druckluftleitung kann beispielsweise zumindest teilweise die erste Zu- und/oder Abführungsleitung 07 und/oder zumindest teilweise die zweite Zu- und/oder Abführungsleitung 08 und/oder zumindest teilweise einen regelbaren Bypass 12 am Wärmespeicher 05 vorbei umfassen.

Die Mittel 06 zur elektrischen Zuheizung umfassen eine im Wärmespeicher 05 angeordnete elektrische Heizung 13. Zusätzlich können die Mittel 06 zur elektrischen Zuheizung eine in der Druckluftleitung vorgesehene elektrische Heizung 14 umfassen. Die elektrische Heizung 14 kann beispielsweise wie in Fig. 1 dargestellt in einer Heizkammer 15 untergebracht sein, die in einem parallel zum Wärmespeicher 05 angeordneten, regelbaren Bypass 12 vorgesehen ist.

Beispielsweise kann vermittels des Bypass 12 zumindest gegen Ende des Entladebetriebs ein erster Teil von dem Druckluftspeicher 04 entnommener Druckluft durch elektrische Zuheizung in die Druckluft vermittels der in der Heizkammer 15 untergebrachten elektrischen Heizung 14 und ein zweiter Teil von dem Druckluftspeicher 04 entnommener Druckluft vermittels aus dem Wärmespeicher 05 entnommener Wärme erhitzt und unter Einhaltung einer zumindest zeitweilig konstanten Turbomaschineneintrittstemperatur T gemischt und der Turbomaschine 03 zum Entspannen zugeführt werden.

Bei der Turbomaschineneintrittstemperatur T handelt es sich dabei um die Temperatur, welche während des Entspannens von dem Druckluftspeicher 04 entnommener Druckluft am Eingang der hierfür vorgesehenen Turbomaschine 03 noch vor dem in dieser stattfindenden Entspannungsprozess herrscht.

Um eine konstante Turbomaschineneintrittstemperatur T einzustellen, kann ein Temperaturfühler 21 vorgesehen sein, sowie mindestens ein regelbares Ventil 22, dessen Öffnen und Schließen wie in Fig. 1 gestrichelt angedeutet anhand eines Ausgangssignals des Temperaturfühlers 21 geregelt wird, um den Durchfluss des ersten Teils von dem Druckluftspeicher 04 entnommener Druckluft durch den Bypass 12 hindurch so einzustellen, dass sich durch Mischen mit dem vermittels Wärme aus dem Wärmespeicher 05 erhitzten zweiten Teil von dem Druckluftspeicher 04 entnommener Druckluft die erwünschte konstante Turbomaschineneintrittstemperatur T einstellt. Bei Betrieb mit konstanter Turbomaschineneintrittstemperatur T kann die Turbomaschine 03 zum Entspannen auf diese Temperatur ausgelegt werden, wodurch sie einen höheren Wirkungsgrad erzielt, als bei Auslegung auf eine während des Entladebetriebs nur kurzzeitig erreichte Temperatur bei ansonsten ständig veränderlicher Turbomaschineneintrittstemperatur T

Darüber hinaus kann das Druckluftspeicherkraftwerk 01 einen Rekuperator umfassend beispielsweise zwei über einen Wärmeträgermittelkreislauf 18 miteinander verbundenen Wärmetauscher 16, 17 aufweisen, mit dem noch in der Luft nach dem Entspannen enthaltene Restwärme Q_{R} aus dem Druckluftspeicher 04 entnommener und noch kalter Druckluft zugeführt wird.

Die Mittel 06 zur elektrischen Zuheizung können alternativ oder zusätzlich einen von einem elektrischen Antriebsmotor elektrisch angetriebenen Verdichter 19 umfassen. Der Verdichter 19 hat bevorzugt ein variables Verdichtungsverhältnis. Das Verdichtungsverhältnis ist bevorzugt proportional der Drehzahl des Verdichters 19 und damit des elektrischen Antriebsmotors. Besonders bevorzugt handelt es sich bei dem Verdichter 19 um einen Radialverdichter.

Mittels des Verdichters 19 kann zumindest zeitweilig ein konstanter Turbomaschineneintrittsdruck P während des Entspannens hergestellt werden, gegebenenfalls zusätzlich zu einer zumindest zeitweilig konstanten Turbomaschineneintrittstemperatur T.

Beim Turbomaschineneintrittsdruck P handelt es sich dabei um den Druck, welcher während des Entspannens von dem Druckluftspeicher 04 entnommener Druckluft am Eingang der hierfür vorgesehenen Turbomaschine 03 noch vor dem in dieser stattfindenden Entspannungsprozess herrscht.

Der Turbomaschineneintrittsdruck P kann beispielsweise mittels eines Druckmessgeräts 20 vor dem Eintritt in die Turbomaschine 03 zum Entspannen überwacht und der Verdichter 19 entsprechend geregelt werden.

Darüber hinaus kann das adiabatische Druckluftspeicherkraftwerk Mittel 23 zur Zwischenspeicherung von zu Beginn des Entladebetriebs im Vergleich zum Ende des Entladebetriebs mehr produzierter Elektrizität beispielsweise bis zu einer Zurverfügungstellung dieser Elektrizität an die Mittel 06 zur elektrischen Zuheizung zur zumindest teilweisen Erhitzung der Druckluft zumindest gegen Ende des Entladebetriebs umfassen. Bei den Mitteln 23 zur Zwischenspeicherung von Elektrizität kann es sich beispielsweise um einen Akkumulator und/oder eine Batterie handeln. Auch ist eine mechanische Speicherung überschüssiger Energie, beispielsweise in Form kinetischer Energie beispielsweise mittels eines Schwungrads, und/oder in Form von potentieller Energie, beispielsweise vermittels eines Pumpspeichers, und/oder in Form von elektrischer Energie, beispielsweise in Form eines Kondensators denkbar.

Das adiabatische Druckluftspeicherkraftwerk 01 erlaubt die Durchführung eines Verfahrens zum Betrieb eines adiabatischen Druckluftspeicherkraftwerks 01 mit:
- mindestens einer Turbomaschine 02, 03 zum Verdichten und/oder Entspannen von Druckluft,
- mindestens einen zumindest zeitweilig mit mindestens einer Turbomaschine 02, 03 kommunizierenden Druckspeicher 04 zur Zwischenspeicherung verdichteter Druckluft, sowie
- mindestens einen Wärmespeicher 05 zur Entnahme und Speicherung von während des Verdichtens der Druckluft entstehender Wärme und deren Wiederabgabe während des Entspannens der Druckluft,
bei dem eine elektrische Zuheizung vorgesehen ist.

Die elektrische Zuheizung erfolgt in den Wärmespeicher 05 während des Speicherbetriebs des adiabatischen Druckluftspeicherkraftwerks 01, wenn der Druckluftspeicher 04 voll ist.

Zusätzlich kann die elektrische Zuheizung während des Entladebetriebs des adiabatischen Druckluftspeicherkraftwerks 01 vorgesehen sein, wenn der Druckluftspeicher 04 durch Entnahme und Entspannung von Druckluft entleert wird. Dabei kann die elektrische Zuheizung in den Wärmespeicher 05 und/oder in die Druckluft erfolgen.

Die Mittel 23 zur Zwischenspeicherung von Elektrizität erlauben die Durchführung eines Verfahrens, bei dem eine Zwischenspeicherung von zu Beginn des Entladebetriebs des adiabatischen Druckluftspeicherkraftwerks 01, während dem der Druckluftspeicher 04 durch Entnahme und Entspannung von Druckluft unter Erzeugung von Elektrizität entleert wird, im Vergleich zum Ende des Entladebetriebs mehr produzierter Elektrizität und Weiterverwendung dieser mehr produzierten Elektrizität zur elektrischen Zuheizung gegen Ende des Entladebetriebs vorgesehen ist. Zu Beginn des Entladebetriebs wird dabei im Vergleich zum Ende des Entladebetriebs wegen des zu Beginn höheren Temperaturniveaus im Wärmespeicher 05 und des zu Beginn höheren Druckniveaus im Druckluftspeicher 04 mehr Elektrizität produziert. Durch Zwischenspeicherung dieser Elektrizität und Verwendung gegen Ende des Entladebetriebs kann die Elektrizitätserzeugung vergleichmäßigt werden und außerdem durch die elektrische Zuheizung gegen Ende des Entladebetriebs eine Vergleichmäßigung der Turbomaschineneintrittstemperatur T eihergehend mit einer Wirkungsgradsteigerung der Turbomaschine 03 zum Entspannen erzielt werden.

Ferner erlaubt das mit einem Verdichter 19 ausgestattete adiabatische Druckluftspeicherkraftwerk 01 die Durchführung eines Verfahrens, bei dem alternativ oder zusätzlich vorgesehen sein kann, dass vor dem Entspannen in einer Turbomaschine 02 eine Verdichtung der Druckluft zumindest zeitweilig auf einen gleich bleibenden Turbomaschineneintrittsdruck P vorgesehen ist. Der Verdichter 19 kann elektrisch und/oder beispielsweise mittels Wellenleistung der Turbomaschine 03 zum Entspannen von Druckluft mechanisch angetrieben sein.

Ist der Verdichter elektrisch angetrieben, so stellt dessen Betrieb während des Entladens des Druckluftspeichers 04 eine elektrisch Zuheizung dar.

Beispielsweise kann der ein mit abnehmenden Druck im Druckluftspeicher 04 zunehmendes Verdichtungsverhältnis besorgende Verdichter 19 als Radialverdichter ausgeführt sein. Radialverdichter nutzen die Massenträgheit der Luft und weisen über einen weiten Drehzahlbereich hinweg einen weitgehend konstanten Wirkungsgrad auf, der unabhängig vom Verdichtungsverhältnis ist. Darüber hinaus können sie in einem weiten Drehzahlbereich eingesetzt werden, wobei deren Verdichtungsverhältnis proportional der Drehzahl ist.

Dabei kann vorgesehen sein, dass die Druckluft nach der Wärmezufuhr auf ein dem konstanten Turbomaschineneintrittsdrucks P entsprechendes Druckniveau verdichtet wird, oder wie in Fig. 1 angedeutet, dass die von dem Druckluftspeicher 04 entnommene Druckluft vor der Wärmezufuhr auf ein zum Erhalt des konstanten Turbomaschineneintrittsdrucks P gleich bleibendes Druckniveau verdichtet wird.

Vermittels des Wärmeträgermittelkreislaufs 18 kann darüber hinaus ein Verfahren verwirklicht werden, bei dem zusätzlich noch in der Luft nach dem Entspannen enthaltene Restwärme der aus dem Druckluftspeicher 04 entnommenen und noch kalten Druckluft zugeführt wird. Gegebenenfalls kann hierbei noch eine Wärmepumpe in den Wärmeträgermittelkreislauf 18 integriert sein, um ein höheres Temperaturniveau zu erhalten.

Bei einer alternativen oder zusätzlichen Verbindung des Wärmeträgermittelkreislaufs 18 mit der Umgebung gegebenenfalls unter Zwischenschaltung einer Wärmepumpe kann Umgebungswärme der aus dem Druckluftspeicher 04 entnommenen und der noch kalten Druckluft zugeführt werden.

Die Erfindung ist insbesondere im Bereich der Herstellung, des Aufbaus und des Betriebs von adiabatischen Druckluftspeicherkraftwerken gewerblich anwendbar.

### Bezugszeichenliste

- 01: adiabatisches Druckluftspeicherkraftwerk
- 02: Turbomaschine zum Verdichten
- 03: Turbomaschine zum Entspannen
- 04: Druckluftspeicher
- 05: Wärmespeicher
- 06: Mittel
- 07: erste Zu- und/oder Abführungsleitung
- 08: zweite Zu- und/oder Abführungsleitung
- 09: Antriebsmotor
- 10: Generator
- 11: Absperrmittel
- 12: Bypass
- 13: elektrische Heizung
- 14: elektrische Heizung
- 15: Heizkammer
- 16: Wärmetauscher
- 17: Wärmetauscher
- 18: Wärmeträgermittelkreislauf
- 19: Verdichter
- 20: Druckmessgerät
- 21: Temperaturfühler
- 22: Ventil
- 23: Mittel

- T: Turbomaschineneintrittstemperatur
- P: Turbomaschineneintrittsdruck
- Q_{R}: Restwärme

## Patentansprüche

1. Verfahren zum Betrieb eines adiabatischen Druckluftspeicherkraftwerks (01) mit:
- mindestens einer Turbomaschine (02, 03) zum Verdichten und/oder Entspannen von Druckluft,
- mindestens einen zumindest zeitweilig mit mindestens einer Turbomaschine (02, 03) kommunizierenden Druckluftspeicher (04) zur Zwischenspeicherung verdichteter Druckluft, sowie
- mindestens einen Wärmespeicher (05),
wobei das Verfahren vorsieht, dass:
- eine elektrische Zuheizung in einen Wärmespeicher erfolgt, und
- zumindest zum Teil die bei der Verdichtung der Luft erzeugte Wärme unter Abkühlung der verdichteten Luft bei deren Zufuhr zum Druckluftspeicher (04) einem Wärmespeicher (05) zugeführt wird und der Wärmespeicher (05) bei der Entnahme der Druckluft aus dem Druckluftspeicher (04) wieder entladen wird, indem die in dem Wärmespeicher (05) gespeicherte Wärme der unter Entspannung durch die Turbomaschine (03) strömenden Luft wieder zugeführt wird,
**dadurch gekennzeichnet,**
**dass** die elektrische Zuheizung zumindest während des Speicherbetriebs des adiabatischen Druckluftspeicherkraftwerks (01) in den zur Entnahme und Speicherung von während des Verdichtens der Druckluft entstehender Wärme und deren Wiederabgabe während des Entspannens der Druckluft vorgesehenen Wärmespeicher (05) erfolgt, wenn der Druckluftspeicher (04) voll ist.

2. Verfahren nach Anspruch 1,
**dadurch gekennzeichnet,**
**dass** die elektrische Zuheizung zusätzlich während des Entladebetriebs des adiabatischen Druckluftspeicherkraftwerks (01) vorgesehen ist, wenn der Druckluftspeicher (04) durch Entnahme und Entspannung von Druckluft entleert wird.

3. Verfahren nach Anspruch 2,
**gekennzeichnet durch**
eine elektrische Zuheizung auf eine zumindest zeitweilig konstante Turbomaschineneintrittstemperatur (T).

4. Verfahren nach Anspruch 2 oder 3,
**gekennzeichnet durch**
eine elektrische Zuheizung in die dem Druckluftspeicher (04) entnommene Druckluft.

5. Verfahren nach einem der vorhergehenden Ansprüche,
**gekennzeichnet durch**
eine Zwischenspeicherung von zu Beginn des Entladebetriebs des adiabatischen Druckluftspeicherkraftwerks (01), während dem der Druckluftspeicher (04) durch Entnahme und Entspannung von Druckluft unter Erzeugung von Elektrizität entleert wird, im Vergleich zum Ende des Entladebetriebs mehr produzierter Elektrizität und Weiterverwendung dieser Elektrizität zur elektrischen Zuheizung gegen Ende des Entladebetriebs.

6. Verfahren nach einem der vorhergehenden Ansprüche,
**dadurch gekennzeichnet,**
**dass** zumindest gegen Ende des Entladebetriebs ein erster Teil von dem Druckluftspeicher (04) entnommener Druckluft durch elektrische Zuheizung und ein zweiter Teil von dem Druckluftspeicher (04) entnommener Druckluft vermittels aus dem Wärmespeicher (05) entnommener Wärme erhitzt, gemischt und der Turbomaschine (03) zum Entspannen zugeführt werden.

7. Verfahren nach einem der vorhergehenden Ansprüche,
**dadurch gekennzeichnet,**
**dass** vor dem Entspannen in einer Turbomaschine (03) eine Verdichtung der Druckluft auf einen konstanten Turbomaschineneintrittsdruck (P) vorgesehen ist.

8. Verfahren nach einem der vorhergehenden Ansprüche,
**dadurch gekennzeichnet,**
**dass** Umgebungswärme und/oder noch in der Luft nach dem Entspannen enthaltene Restwärme (QR) der aus dem Druckluftspeicher (04) entnommenen und noch kalten Druckluft zugeführt wird.

9. Verfahren nach einem der vorhergehenden Ansprüche,
**dadurch gekennzeichnet,**
**dass** die elektrische Zuheizung nur dann zumindest zeitweilig stattfindet, wenn der Druckluftspeicher voll ist.

10. Adiabatisches Druckluftspeicherkraftwerk (01) umfassend:
- mindestens eine Turbomaschine (02, 03) zum Verdichten und/oder Entspannen von Druckluft,
- mindestens einen zumindest zeitweilig mit mindestens einer Turbomaschine (02, 03) kommunizierenden Druckluftspeicher (04) zur Zwischenspeicherung verdichteter Druckluft,
- mindestens einen Wärmespeicher (05) zur Entnahme und Speicherung von während des Verdichtens der Druckluft entstehender Wärme und deren Wiederabgabe während des Entspannens der Druckluft, sowie
- Mittel (06) zur elektrischen Zuheizung,
**dadurch gekennzeichnet,**
**dass** die Mittel (06) zur elektrischen Zuheizung eine im Wärmespeicher (05) angeordnete elektrische Heizung (13) umfassen,
wobei mittels der Mittel (06) zur elektrischen Zuheizung eine elektrische Zuheizung zumindest während des Speicherbetriebs des adiabatischen Druckluftspeicherkraftwerks (01) in den Wärmespeicher (05) erfolgt, wenn der Druckluftspeicher (04) voll ist.

## Claims

1. Method for operating an adiabatic compressed air storage power plant (01), comprising:
- at least one turbomachine (02, 03) for compressing and/or expanding compressed air,
- at least one compressed air storage device (04) in at least temporary communication with at least one turbomachine (02, 03) for intermediate storage of compressed pressurized air, and
- at least one heat storage device (05),
wherein the method provides:
- electric supplemental heating into a heat storage device, and
- supplying, at least in part, the heat generated during the compression of the air to a heat storage device (05) while cooling the compressed air during its supply to the compressed air storage device (04), and discharging the heat storage device (05) again during the extraction of the compressed air from the compressed air storage device (04) by delivering the heat stored in the heat storage device (05) back to the air flowing through the turbomachine (03) while expanding,
**characterized in that**
the electric supplemental heating into the heat storage device (05) provided for extracting and storing heat generated during the compression of the compressed air and transferring said heat back during the expansion of the compressed air is realized at least during storage operation of the adiabatic compressed air storage power plant (01) when the compressed air storage device (04) is full.

2. Method in accordance with claim 1,
**characterized in that**
the electric supplemental heating is additionally provided during the discharging mode of operation of the adiabatic compressed air storage power plant (01) when the compressed air storage device (04) is emptied by extraction and expansion of compressed air.

3. Method in accordance with claim 2,
**characterized by**
electric supplemental heating to an at least temporarily constant turbomachine inlet temperature (T).

4. Method in accordance with claim 2 or 3,
**characterized by**
electric supplemental heating into the compressed air extracted from the compressed air storage device (04).

5. Method in accordance with any one of the preceding claims,
**characterized by**
intermediately storing excess electricity produced at the beginning, compared to the end, of the discharging mode of operation of the adiabatic compressed air storage power plant (01) during which the compressed air storage device (04) is emptied by extraction and expansion of compressed air while generating electricity, and re-using this electricity for electric supplemental heating towards the end of the discharging mode of operation.

6. Method in accordance with any one of the preceding claims,
**characterized in that**
at least towards the end of the discharging mode of operation, a first portion of compressed air extracted from the compressed air storage device (04) is heated by electric supplemental heating and a second portion of compressed air extracted from the compressed air storage device (04) is heated by use of heat extracted from the heat storage device (05), and these are mixed and fed to the turbomachine (03) for expansion.

7. Method in accordance with any one of the preceding claims,
**characterized in that**
provision is made for compressing the compressed air to a constant turbomachine inlet pressure (P) prior to expansion in a turbomachine (3).

8. Method in accordance with any one of the preceding claims,
**characterized in that**
ambient heat and/or residual heat (QR) still contained in the air after expansion is supplied to the compressed air which is extracted from the compressed air storage device (04) and is still cold.

9. Method in accordance with any one of the preceding claims,
**characterized in that**
the electric supplemental heating only occurs, at least temporarily, when the compressed air storage device is full.

10. Adiabatic compressed air storage power plant (01), comprising:
- at least one turbomachine (02, 03) for compressing and/or expanding compressed air,
- at least one compressed air storage device (04) in at least temporary communication with at least one turbomachine (02, 03) for intermediate storage of compressed pressurized air, and
- at least one heat storage device (05) for extracting and storing heat generated during the compression of the compressed air and transferring said heat back during the expansion of the compressed air, and
- means (06) for electric supplemental heating,
**characterized in that**
the means (06) for electric supplemental heating comprise an electric heating device (13) arranged in the heat storage device (05), wherein, by way of the means (06) for electric supplemental heating, electric supplemental heating into the heat storage device (05) is realized at least during storage operation of the adiabatic compressed air storage power plant (01) when the compressed air storage device (04) is full.

## Revendications

1. Procédé de fonctionnement d'une centrale d'accumulation d'air comprimé adiabatique (01), comportant :
- au moins une turbomachine (02, 03) pour la compression et/ou la détente d'air comprimé,
- au moins un accumulateur d'air comprimé (04) communiquant au moins temporairement avec au moins une turbomachine (02, 03) pour l'entreposage d'air comprimé compressé, ainsi que
- au moins un accumulateur de chaleur (05),
dans lequel le procédé prévoit que :
- un chauffage électrique soit effectué dans un accumulateur de chaleur, et
- au moins en partie la chaleur générée lors de la compression de l'air soit amenée à un accumulateur de chaleur (05) par refroidissement de l'air compressé lors de son amenée à l'accumulateur d'air comprimé (04) et l'accumulateur de chaleur (05) soit de nouveau déchargé lors du retrait de l'air comprimé de l'accumulateur d'air comprimé (04), en ce que la chaleur, accumulée dans l'accumulateur de chaleur (05), de l'air s'écoulant par détente par la turbomachine (03) soit de nouveau amenée,
**caractérisé en ce**
**que** le chauffage électrique est effectué au moins pendant le fonctionnement de l'accumulateur de la centrale d'accumulation d'air comprimé adiabatique (01) dans l'accumulateur de chaleur (05) prévu pour le retrait et l'accumulation de la chaleur apparaissant pendant la compression de l'air comprimé et son rejet pendant la détente de l'air comprimé, lorsque l'accumulateur d'air comprimé (04) est plein.

2. Procédé selon la revendication 1,
**caractérisé en ce**
**que** le chauffage électrique est en outre prévu pendant le fonctionnement de déchargement de la centrale d'accumulation d'air comprimé adiabatique (01), lorsque l'accumulateur d'air comprimé (04) est vidé par retrait et détente d'air comprimé.

3. Procédé selon la revendication 2,
**caractérisé par**
un chauffage électrique à une température d'entrée de turbomachine (T) au moins temporairement constante.

4. Procédé selon la revendication 2 ou 3,
**caractérisé par**
un chauffage électrique dans l'air comprimé retiré de l'accumulateur d'air comprimé (04).

5. Procédé selon l'une des revendications précédentes,
**caractérisé par**
une accumulation temporaire de plus d'électricité produite au début du fonctionnement de déchargement de la centrale d'accumulation d'air comprimé adiabatique (01), pendant lequel l'accumulateur d'air comprimé (04) est vidé par retrait et détente d'air comprimé par génération d'électricité, par rapport à la fin du fonctionnement de déchargement, et la réutilisation de cette électricité pour le chauffage électrique vers la fin du fonctionnement de déchargement.

6. Procédé selon l'une des revendications précédentes,
**caractérisé en ce**
**qu'**au moins vers la fin du fonctionnement de déchargement une première partie de l'air comprimé retiré de l'accumulateur d'air comprimé (04) est chauffée par chauffage électrique et une deuxième partie de l'air comprimé retirée de l'accumulateur d'air comprimé (04) est chauffée au moyen de la chaleur retirée de l'accumulateur de chaleur (05) et elles sont mélangées et amenées à la turbomachine (03) pour la détente.

7. Procédé selon l'une des revendications précédentes,
**caractérisé en ce**
**qu'**avant la détente dans une turbomachine (03) une compression de l'air comprimé à une pression constante d'entrée de turbomachine (P) est prévue.

8. Procédé selon l'une des revendications précédentes,
**caractérisé en ce**
**que** de la chaleur ambiante et/ou de la chaleur résiduelle (QR) encore contenue dans l'air après la détente est amenée à l'air comprimé retiré de l'accumulateur d'air comprimé (04) et encore froid.

9. Procédé selon l'une des revendications précédentes,
**caractérisé en ce**
**que** le chauffage électrique a lieu seulement au moins temporairement lorsque l'accumulateur d'air comprimé est plein.

10. Centrale d'accumulation d'air comprimé adiabatique (01) comprenant :
- au moins une turbomachine (02, 03) pour la compression et/ou la détente d'air comprimé,
- au moins un accumulateur d'air comprimé (04) communiquant au moins temporairement avec au moins une turbomachine (02, 03) pour le stockage intermédiaire d'air comprimé compressé,
- au moins un accumulateur de chaleur (05) pour le retrait et l'accumulation de chaleur apparaissant pendant la compression de l'air comprimé et son rejet pendant la détente d'air comprimé, ainsi que
- des moyens (06) pour le chauffage électrique,
**caractérisé en ce**
**que** les moyens (06) pour le chauffage électrique comportent un chauffage (13) électrique agencé dans l'accumulateur de chaleur (05),
dans lequel à l'aide des moyens (06) pour le chauffage électrique un chauffage électrique est effectué au moins pendant le fonctionnement de l'accumulateur de la centrale d'accumulation d'air comprimé adiabatique (01) dans l'accumulateur de chaleur (05), lorsque l'accumulateur d'air comprimé (04) est plein.
